# EUROPEAN PATENT SPECIFICATION

(11) **EP 2 884 681 B1**
(45) Date of publication and mention of the grant of the patent: **09.03.2016**
(21) Application number: 13306696.9
(22) Date of filing: 11.12.2013
(51) Int. Cl.: H04J 3/06, H04J 3/14, H04L 12/24, H04J 14/02

(54) **Method of reliable loss of frame alarming in an optical transmission network**
Verfahren für zuverlässigen Alarm eines Rahmenverlusts in einem optischen Übertragungsnetzwerk
Procédé d'alarme fiable de perte de trame dans un réseau de transmission optique

(43) Date of publication of application: 17.06.2015
(73) Proprietor: ALCATEL LUCENT, 92100 Boulogne-Billancourt (FR)
(72) Inventor: Thomas, Wolfgang, 90411 Nürnberg (DE); Rahn, Jürgen, 90411 Nürnberg (DE)
(74) Representative: Wetzel, Emmanuelle

(56) References cited:
- EP-A2- 1 271 822
- JP-A- S61 107 838
- US-A1- 2013 051 792

## Description

### Field of the invention

The invention relates to a method of raising a loss of frame alarm in an optical network.

### Background

In optical transmission networks, such as an Optical Transport Network (OTN), a network of Synchronous Digital Hierarchy (SDH) or a Synchronous Optical Network (SONET), data is transmitted using framed optical data signals. An optical network element receiving such a framed signal needs to detect the frame position for proper data reception. Otherwise, the receiving network element will not be able to properly de-map data from the one or more received frames. In other words, a framer of a receiving network element has to lock to the start position, also called frame position, of received frames.

According to different telecommunication standards, there is a demand that a framer has to be able to lock to a start position of received frames even if the bit error rate of the received data representing the one or more frames rises up to a threshold of 10e-3. If the framer is able to lock to the start position, then this is called an in-frame (IF) state.

If the bit error rate of the received data rises above the threshold value up to for example 10e-2, then it may occur, that the framer does not lock to the start position of one or more received frames, thus being in an out-of-frame (OOF) state.

According to the standard ITU-T G.783, the presence of the detected OOF state is detected, by filtering the OOF state in time, using preferably a persistency filter with a time window of 3 milliseconds (ms). A loss of frame defect (dLOF) is detected in the case that the OOF state persists for at least these 3 ms. The dLOF is then correlated with one or more other defects, using Boolean AND concatenation, to yield a defect correlation (cLOF).

Such defect correlation cLOF may then be filtered by a further persistency filter having preferably a time window of 2.5 seconds (sec). A frame failure fLOF is detected in the case that the cLOF persists for at least these 2.5 sec. In the case of a frame failure fLOF an alarm such as an Alarm Indication Signal (AIS) is raised by the optical network element. Another device or a network operator receiving this alarm AIS may then derive from this alarm that the network element that raised the alarm AIS is not able to lock its framer to the start position of one or more frames, possibly due to degraded optical signal transmission towards this network element.

It is an object of the invention to improve the known methods for detecting degraded optical signal transmission causing a problem for a framer of an optical network element.

### Summary

Proposed is a method of raising a loss of frame alarm in an optical transmission network at an optical network element. The method comprises the steps of
- detecting an out-of-frame (OOF) state,
- detecting a presence of the OOF state, by filtering the OOF state in time using at least one time window,
- detecting a loss of frame defect, in case the presence of the OOF state is detected,
- determining a defect correlation, by correlating the loss of frame defect with one or more further defects, and finally,
- in case of a presence of the defect correlation, instantaneously detecting a frame failure and raising a loss of frame alarm.

In order to grasp the advantages of the proposed method, the following aspects have to be taken into consideration.

When detecting a presence of an OOF state, such presence is usually detected by a persistency filter filtering the OOF state in time with a time window of preferably 3 ms, although different time filtering is possible. A loss of frame defect, preferably a dLOF, is detected due to the detected presence of the OOF and then furthermore a defect correlation, preferably a cLOF, is determined in dependence of the loss of frame defect, dLOF. Usually, according to known solutions, such a defect correlation, cLOF, is then filtered by a persistency filter with a time window of preferably 2.5 sec before detecting the failure and raising the loss of frame alarm. Such a solution may be detrimental in a situation, in which the framer may toggle between an OOF state and an IF state.

For example, it may be the case that the framer stays in the OOF state long enough, such that the presence of the OOF state is detected even after filtering the OOF state by the time window of preferably 3 ms duration. But the toggling of the framer between the OOF state and the IF state may be at a frequency, such that the subsequent filtering of the defect correlation, cLOF, by the persistency filter with a time window of preferably 2.5 sec causes the loss of frame alarm never to be raised, since the defect correlation, cLOF, may persist only for a time duration that is less than the time window of the persistency filter applied to the defect correlation, cLOF. Thus, although the framer is repeatedly in an OOF state, the frame failure is not detected and the loss of frame alarm is not raised, which leads to the fact that the operator is not informed about the degraded data reception at the network element. In other words, such failure detection leads to the paradox effect that the data transmission may be degraded, but the network system is alarm free, i.e. from looking at the raised alarms the operator cannot determine that there is a transmission problem.

But, according to the proposed method, since the frame alarm is detected and the loss of frame alarm is raised instantaneously in case of a presence of the defect correlation, the loss of frame alarm is also raised in the case that the frame is in the OOF state for much shorter time periods, only defined by the time window of the filter used for detecting the presence of the OOF. Thus, the operator is informed about the degraded data reception also in the case that the framer toggles between the OOF state and the IF state.

Detecting the frame failure and raising the alarm instantaneously is in other words detecting the frame failure and raising the alarm directly at the presence of the defect correlation. In other words, detecting the frame failure and raising the alarm is carried out without filtering the defect correlation in time.

For time-division-multiplex (TDM) systems, which are operated without wavelength-division-multiplex (WDM) systems, the above described problem may be only a theoretical problem, as the vendors carefully specify the margins for their optics, and if the systems are operated within the specified margins this problem may not occur, as the margins are defined such that an error rate of 10e-3 will not be reached. The situation may change with the introduction of WDM systems, especially with WDM systems with protection and/or restoration: In WDM transmission it may happen that single wavelengths degrade to a degree that a bit error rate of 10e-3 occurs, which then leads to the above described problem. The root cause can be manifold, such as degraded optical components, optical cross talk, or too much dispersion, respectively too much attenuation after a protection/restoration in the optical domain.

Instead of using the proposed method, performance monitoring may be used to detect the degradation of the signal. However, many operators are not willing to use performance monitoring. Furthermore, many operators trigger repair actions based on alarms. As long as there is no alarm, the operators perform no corrective actions.

A further different solution may be, that the optical analogue parameters of the network are monitored by the WDM systems. This however is unpractical, as it requires detailed knowledge about the characteristics of the optical components used in the transmission path.

Thus, the proposed method provides a solution for detecting a degraded data reception with regard to a framer reaching one or more OOF states without having to implement performance monitoring and/or without having to monitor optical analogue parameters of the network, but instead only relying on raised alarms.

In other words, the operator is alarmed, in case the optical signal has degraded to a level where the framer starts missing frames, i.e. to a level where transmission is severely impacted. This allows the operator to realize that he has a transmission problem and to perform immediate repair actions.

Preferably, the OOF states are detected according to ITU-T G.798 8.2.1

Preferably, the step of filtering the OOF state is performed by applying a persistency filter with a time window and the presence of the OOF state is detected in case the OOF state persists for the whole of the time window. Preferably, this time window is of 3 ms length.

Preferably, the step of filtering the OOF state is performed by applying a filter with a time window and the presence of the OOF state is detected in case the OOF state is present within at least two consecutive instances of the time window. Preferably, this time window is of 2.5 sec length.

Preferably, the loss of frame defect is correlated with the one or more further defects using one or more Boolean AND functions.

Preferably, the loss of frame alarm is an Alarm Indication Signal.

Preferably, the loss of frame defect is a dLOF.

Preferably, the loss of frame defect is a defect indicating an unstable defect.

Preferably, the loss of frame defect is a dULOF.

Preferably, the defect correlation is a cLOF.

Preferably, the failure is a fLOF.

### Brief description of the Figures

Figure 1 a shows steps of detecting a loss of frame defect.
Figure 1b shows steps of detecting an IF state or an OOF state.
Figure 1c shows steps of detecting a frame failure according to a preferred embodiment.
Figure 2 shows steps of detecting a loss of frame defect according to a preferred embodiment.

### Description of embodiments

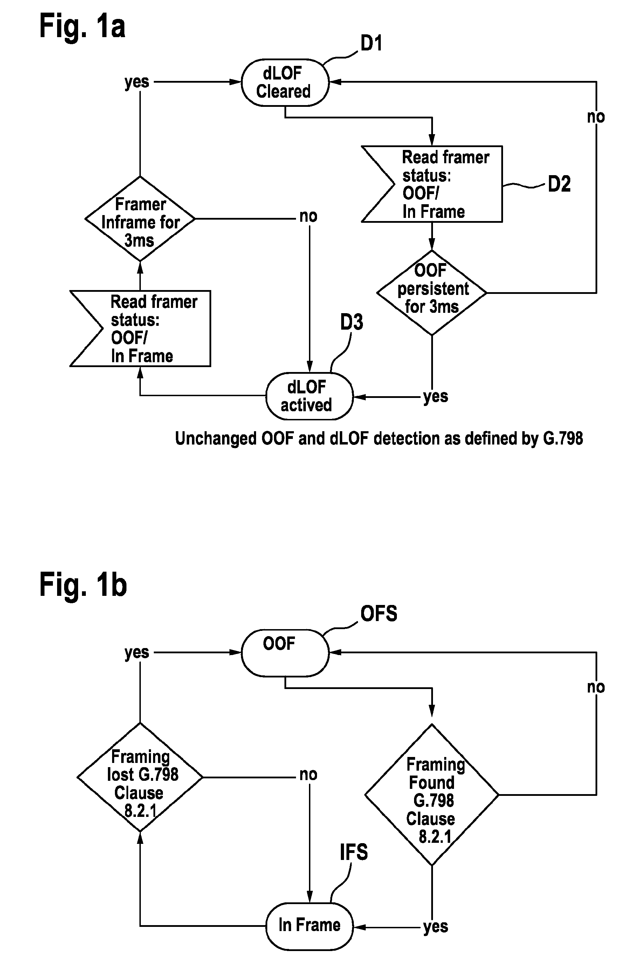

Figure 1b shows steps of detecting an IF state or an OOF state. It shall be assumed, that initially the framer is in a state IFS, in which the framer has the in-frame (IF) state and is locked to the starting position of received frames. In the case, that according to the condition described in ITU-T G.798 (12/2012), clause 8.2.1, the framing is lost, a transition from the IF state IFS to the OOF state OFS is performed. Furthermore, in the case that according to the condition described in ITU-T G.798 (12/2012), clause 8.2.1, the framing is found, a transition from the OOF state OFS back to the IF state IFS is performed.

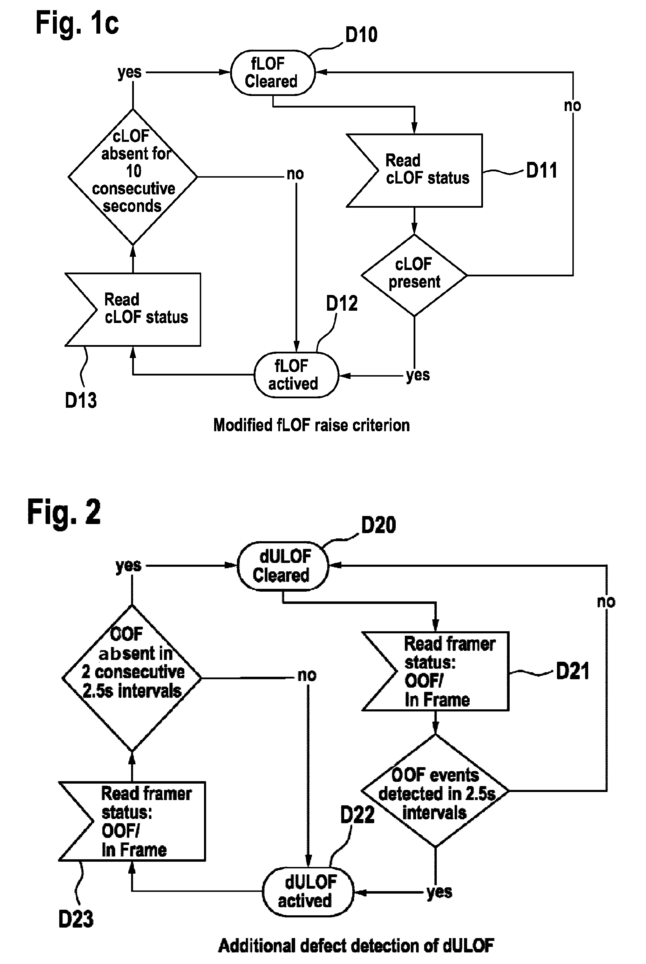

Figure 1 a shows steps of detecting a loss of frame defect. The loss of frame defect is preferably a dLOF. It shall be assumed, that initially the system is in the state D1, in which no loss of frame defect is detected. In a state D2, the status of the framer as detected according to Figure 1b is read. This status is filtered in time using a filter function with a time window. In this example, the status is filtered using a persistency filter with a time window of 3 ms. If the OOF state persists for at least 3ms, then a transition to the state D3 is carried out, in which the loss of frame defect, dLOF, is detected. In the case, that the IF state persists for at least 3 ms, then a transition from the state D3 back to the state D1 is carried out, in which no loss of frame defect, dLOF, is detected, or is in other words cleared.

A detected loss of frame defect, dLOF, is then correlated with one or more further defects using Boolean AND-operations for determining a defect correlation, which is preferably a cLOF. This correlation is preferably carried out as described in ITU-T G.798 (12/2012), page 119, as
cLOF <- dLOF and (not dAIS) and (not AI_TSF-P).

Such correlation is not shown in detail in Figure 1a.

Figure 1c shows steps of detecting a frame failure according to a preferred embodiment. The system shall be assumed to be initially in a state D10, in which not frame failure is detected.

In a state D11, the status of the defect correlation, cLOF, is read.

In the case, that a defect correlation, cLOF, is present, an immediate and/or direct transition to a state D12 is carried out, in which a frame failure, preferably a fLOF, is detected. In case of detecting a frame failure, a loss of frame alarm is raised. The alarm is preferably an AIS.

In the case, that a frame failure was detected, and that the defect correlation, cLOF, read out in the state D13, is absent for a predefined number of consecutive seconds, preferably 10 seconds, the system carries out a transition from the state D12 to the state D10.

In other words, a persistency filter is applied to the OOF anomaly to detect a presence of a loss of frame defect. This immediately leads to consequent actions such as inserting AIS-presenting a forward defect indication so subsequent systems - and potentially also triggering, after a individually configured hold-off time, a transmission protection switch.

The proposed method has the advantage, as already described above in detail , that the alarm is raised even in the case that the framer toggles between the IF state and the OOF state.

Figure 2 shows steps of detecting a loss of frame defect according to a preferred embodiment. Instead of using as the loss of frame defect the dLOF as mentioned with regard to Figure 1a, a different loss of frame defect may be used. This is a loss of frame defect indicating an unstable state of the framer. Preferably, this loss of frame defect is a dULOF.

It shall be assumed, that the system is initially in a state D20, in which no loss of frame defect is detected. In a state D21, the status of the framer as detected according to Figure 1b is read. This status is filtered in time using a filter function with a time window. In this example, the filtering is performed by applying a filter with a time window of 2.5 sec length. The presence of the OOF state is detected in case that the OOF state is present at least once within each of at least two consecutive time windows. If the presence of the OOF state is detected, then a transition to the state D22 is carried out, in which the loss of frame defect, dULOF, is detected. The loss of frame defect, dULOF, is a loss of frame defect indicating an unstable state of the framer.

The loss of frame defect dULOF may be additional to the regular standard loss of frame defect dLOF. The loss of frame defect dULOF needs additional correlation and also contributes to consequent actions.

The defect correlation cULOF is determined, by correlating the loss of frame defect dULOF with one or more further defects. Preferably, the defect correlation cULOF is determined as
cULOF **←** dULOF and (not dLOF) and (not dAIS) and (not AI_TSF<server>)

Preferably, the loss of frame defect dULOF contributes to the consequent action aSSF via
aSSF **←** dAIS or dLOF or dULOF or dLOM or AI_TSF<server>
or (not MI_Active < Adaptation in question>) .

In the case, that a loss of frame defect dULOF was detected, as in state D22, and that the OOF state read out in the state D23 is absent for two consecutive time windows of preferably 2.5sec length, the system carries out a transition back to the state D20.

Proposed is furthermore an optical network element, which contains an optical interface operable to receive a framed optical data signal and that contains furthermore one or more processors operable to carry out the steps of the proposed method. The network element contains the optical interface for receiving the framed optical data signal as well as a receiver for deriving from the signal transmission data. The network element contains the processor that is coupled to the receiver. The processor is operable to carry out the steps of the proposed method. The functions of the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. Method of raising a loss of frame alarm in an optical transmission network,
comprising, at an optical network element,
- detecting an out-of-frame, OOF, state,
- detecting a presence of said OOF state, by filtering said OOF state in time using at least one time window,
- detecting a loss of frame defect, in case said presence of said OOF state is detected,
- determining a defect correlation, by correlating said loss of frame defect with one or more further defects, **characterized by**
- in case of a presence of said defect correlation, instantaneously detecting a frame failure and instantaneously raising a loss of frame alarm.

2. Method according to claim 1,
wherein said OOF state is detected according to ITU-T G.798 8.2.1 , version 12/2012.

3. Method according to claim 1,
wherein the step of filtering said OOF state is performed by applying a persistency filter with a time window and wherein said presence of said OOF state is detected in case said OOF state persists for the whole of said time window.

4. Method according to claim 3,
wherein said time window is of 3 ms length.

5. Method according to claim 1,
wherein the step of filtering said OOF state is performed by applying a filter with a time window and wherein said presence of said OOF state is detected in case said OOF state is present at least once within at least two consecutive instances of said time window.

6. Method according to claim 6,
wherein said time window is of 2.5 sec length.

7. Method according to claim 1,
wherein said loss of frame defect is correlated with said one or more further defects using one or more Boolean AND functions.

8. Method according to claim 1,
wherein said loss of frame alarm is an Alarm Indication Signal.

9. Method according claim 1,
wherein said loss of frame defect is a dLOF.

10. Method according claim 1,
wherein said loss of frame defect is a defect indicating an unstable state of a framer.

11. Method according claim 1 or 10,
wherein said loss of frame defect is a dULOF.

12. Method according claim 1,
wherein said defect correlation is a cLOF.

13. Method according claim 1,
wherein said failure is a fLOF.

14. Optical network element for an optical transmission network,
wherein said optical network element is operable
- to receive a framed optical data signal,
- to detect an out-of-frame, OOF, state,
- to detect a presence of said OOF state, by filtering said OOF state in time using at least one time window,
- to detect a loss of frame defect, in case said presence of said OOF state is detected,
- to determine a defect correlation, by correlating said loss of frame defect with one or more further defects,
**characterized by** that said optical network element is furthermore operable to instantaneously detect a frame failure and to raise instantaneously a loss of frame alarm in case of a presence of said defect correlation.

## Patentansprüche

1. Verfahren für das Auslösen eines Loss-Of-Frame-Alarms in einem optischen Übertragungsnetzwerk, an einem optischen Netzwerkelement umfassend:
- das Feststellen eines Out-Of-Frame-Status, OOF-Status,
- das Feststellen des Vorliegens besagten OOF-Status durch das regelmäßige Filtern besagten OOF-Status unter Verwendung mindestens eines Zeitfensters,
- das Feststellen eines Loss-Of-Frame-Defekts, falls das Vorliegen besagten OOF-Status festgestellt wird,
- das Bestimmen einer Defektkorrelation durch das Korrelieren besagten Loss-Of-Frame-Defekts mit einem oder mehreren weiteren Defekten, **gekennzeichnet durch**
- im Fall des Vorliegens besagter Defektkorrelation das sofortige Feststellen einer Frame-Störung und das sofortige Auslösen eines Loss-Of-Frame-Alarms.

2. Verfahren nach Anspruch 1,
wobei besagter OOF-Status gemäß ITU-T G.798 8.2.1, Version 12/2012 festgestellt wird.

3. Verfahren nach Anspruch 1,
wobei der Schritt des Filterns besagten OOF-Status ausgeführt wird durch die Anwendung eines Persistenzfilters mit Zeitfenster und wobei besagtes Vorliegen besagten OOF-Status in dem Fall festgestellt wird, dass besagter OOF-Status über das gesamte besagte Zeitfenster hinweg anhält.

4. Verfahren nach Anspruch 3,
wobei besagtes Zeitfenster 3 ms lang ist.

5. Verfahren nach Anspruch 1,
wobei der Schritt des Filterns besagten OOF-Status ausgeführt wird durch die Anwendung eines Filters mit Zeitfenster und wobei besagtes Vorliegen besagten OOF-Status in dem Fall festgestellt wird, dass besagter OOF-Status mindestens je einmal innerhalb mindestens zweier aufeinanderfolgender Instanzen besagten Zeitfensters auftritt.

6. Verfahren nach Anspruch 6,
wobei besagtes Zeitfenster 2,5 ms lang ist.

7. Verfahren nach Anspruch 1,
wobei besagter Loss-Of-Frame-Defekt anhand einer oder mehrerer boolescher und-Funktionen mit besagtem einen oder besagten weiteren Defekten korreliert wird.

8. Verfahren nach Anspruch 1,
wobei besagter Loss-Of-Frame-Alarm ein Alarmangabe-Signal ist.

9. Verfahren nach Anspruch 1,
wobei besagter Loss-Of-Frame-Defekt ein Loss-Of-Frame-Defekt (dLOF) ist.

10. Verfahren nach Anspruch 1,
wobei besagter Loss-Of-Frame-Defekt ein Defekt ist, der auf einen instabilen Status eines Framers hindeutet.

11. Verfahren nach Anspruch 1 oder 10,
wobei besagter Loss-Of-Frame-Defekt ein dULOF ist.

12. Verfahren nach Anspruch 1,
wobei besagte Defektkorrelation ein cLOF ist.

13. Verfahren nach Anspruch 1,
wobei besagte Störung ein fLOF ist.

14. Optisches Netzwerkelement für ein optisches Übertragungsnetzwerk, wobei besagtes optisches Netzwerkelement betriebsbereit ist für
- den Empfang eines geframten optischen Datensignals,
- das Feststellen eines Out-Of-Frame-Status, OOF-Status,
- das Feststellen des Vorliegens besagten OOF-Status durch das regelmäßige Filtern besagten OOF-Status unter Verwendung mindestens eines Zeitfensters,
- das Feststellen eines Loss-Of-Frame-Defekts, falls das Vorliegen besagten OOF-Status festgestellt wird,
- das Bestimmen einer Defektkorrelation durch das Korrelieren besagten Loss-Of-Frame-Defekts mit einem oder mehreren weiteren Defekten,
**dadurch gekennzeichnet, dass**
besagtes optisches Netzwerkelement weiterhin dafür ausgelegt ist, um eine Frame-Störung augenblicklich festzustellen und augenblicklich einen Loss-Of-Frame-Alarm auszulösen, wenn besagte Defektkorrelation vorliegt.

## Revendications

1. Procédé de déclenchement d'une alarme de perte de trame dans un réseau de transmission optique, comprenant, au niveau d'un élément de réseau optique, les étapes suivantes :
- détecter un état de non-alignement de trame, OOF,
- détecter une présence dudit état d'OOF en filtrant ledit état d'OOF dans le temps en utilisant au moins une fenêtre de temps,
- détecter un défaut de perte de trame, dans le cas où ladite présence dudit état d'OOF est détectée,
- déterminer une corrélation de défaut en corrélant ledit défaut de perte de trame avec un ou plusieurs défauts supplémentaires,
**caractérisé par**
- dans le cas d'une présence de ladite corrélation de défaut, la détection instantanée d'une panne de perte de trame et le déclenchement instantané d'une alarme de perte de trame.

2. Procédé selon la revendication 1,
dans lequel ledit état d'OOF est détecté conformément à la recommandation UIT-T G.798, paragraphe 8.2.1.

3. Procédé selon la revendication 1,
dans lequel la filtration dudit état d'OOF est exécutée en appliquant un filtre de persistance avec une fenêtre de temps et dans lequel ladite présence dudit état d'OOF est détectée dans le cas ou ledit état d'OOF persiste pendant la totalité de ladite fenêtre de temps.

4. Procédé selon la revendication 3,
dans lequel ladite fenêtre de temps a une durée de 3 ms.

5. Procédé selon la revendication 1,
dans lequel la filtration dudit état d'OOF est exécutée en appliquant un filtre avec une fenêtre de temps et dans lequel ladite présence dudit état d'OOF est détectée dans le cas ou ledit état d'OOF est présent au moins une fois à l'intérieur de deux instances consécutives de ladite fenêtre de temps.

6. Procédé selon la revendication 6,
dans lequel ladite fenêtre de temps a une durée de 2,5 ms.

7. Procédé selon la revendication 1,
dans lequel ledit défaut de perte de trame est corrélé avec lesdits un ou plusieurs défauts supplémentaires en utilisant une ou plusieurs fonctions booléennes ET.

8. Procédé selon la revendication 1,
dans lequel ladite alarme de perte de trame est un signal d'indication d'alarme.

9. Procédé selon la revendication 1,
dans lequel ledit défaut de perte de trame est un dLOF.

10. Procédé selon la revendication 1,
dans lequel ledit défaut de perte de trame est un défaut indiquant un état instable d'un trameur.

11. Procédé selon la revendication 1 ou 10,
dans lequel ledit défaut de perte de trame et une dULOF.

12. Procédé selon la revendication 1,
dans lequel ladite corrélation de défaut est une cLOF.

13. Procédé selon la revendication 1,
dans lequel ladite panne de perte est une fLOF.

14. Élément de réseau optique pour un réseau de transmission optique,
ledit élément de réseau optique pouvant être utilisé pour :
- recevoir un signal de données optique à trame
- détecter un état de non-alignement de trame, OOF,
- détecter une présence dudit état d'OOF en filtrant ledit état d'OOF dans le temps en utilisant au moins une fenêtre de temps,
- détecter un défaut de perte de trame, dans le cas où ladite présence dudit état d'OOF est détectée,
- déterminer une corrélation de défaut en corrélant ledit défaut de perte de trame avec un ou plusieurs défauts supplémentaires,
**caractérisé en ce que**
ledit élément de réseau optique peut en outre être utilisé pour détecter instantanément une panne de perte de trame et pour déclencher instantanément une alarme de perte de trame dans le cas d'une présence de ladite corrélation de défaut.
